# NEW EUROPEAN PATENT SPECIFICATION

(11) **EP 1 786 713 B2**
(45) Date of publication and mention of the opposition decision: **21.11.2018**
(45) Mention of the grant of the patent: 23.02.2011
(21) Application number: 05742712.2
(22) Date of filing: 13.05.2005
(51) Int. Cl.: B65H 39/16

(54) **SHEET PRODUCT COMPRISING AT LEAST TWO PLIES JOINED BY GLUING WITH NON-UNIFORM DISTRIBUTION OF THE GLUE**
FLÄCHENPRODUKT MIT MINDESTENS ZWEI DURCH VERKLEBEN VERBUNDENEN LAGEN MIT NICHT EINHEITLICHER VERTEILUNG DES KLEBSTOFFS
PRODUIT EN FEUILLE COMPRENANT AU MOINS DEUX PLIS JOINTS PAR COLLAGE AVEC DISTRIBUTION NON UNIFORME DE LA COLLE

(30) Priority: 06.09.2004 IT FI20040188
(43) Date of publication of application: 23.05.2007
(73) Proprietor: FABIO PERINI S.p.A., 55100 Lucca (IT)
(72) Inventor: GELLI, Mauro, I-55066 Capannori, Lucca (IT)
(74) Representative: Mannucci, Michele
(86) International application number: PCT/IT2005/000275
(87) International publication number: WO 2006/027810

(56) References cited:
- EP-A- 1 044 807
- WO-A-00/05065
- GB-A- 1 420 139
- US-A- 3 672 950
- US-A- 4 715 918
- US-A- 4 816 320
- US-A- 6 113 723
- US-B1- 6 599 614
- US-B1- 6 681 826

## Description

### Technical Field

The present invention relates to sheet products, with two or more plies joined to one another by gluing, for example and in particular (although not exclusively) made of tissue paper.

More specifically, the invention relates to sheet products especially of the type wound in a roll, such as kitchen towels, toilet paper and the like.

### State of the Art

In the production of toilet paper, kitchen towels and other products made of tissue paper or creped paper, two or more plies of paper joined to one another by ply-bonding or gluing are normally used. When the plies are joined by gluing they are normally embossed, that is, subjected to permanent mechanical deformation with the formation of protuberances on the plies. The glue is applied to the front surface of the protuberances of at least one of the two plies and the plies thereby embossed and provided with glue are laminated between two embossing rollers or between one embossing roller and one laminating roller. Various embossing and laminating devices have been designed for this purpose.

Application of the glue to join the plies causes some drawbacks. In the first place the glue - being an expendable material - increases the cost of the finished product In the second place, the presence of glue decreases the softness of the product, which becomes more rigid, and has a negative influence on the absorption capacities thereof.

Various systems have been designed to reduce the amount of glue used to join the plies, and typically the number of protuberances to which the glue is applied tends to be reduced.

However, these measures are not always sufficient to obtain a product with the desired softness and/or having the desired characteristics of absorption.

WO-A-00/05065 discloses a paper web having a liquid impermeable, breathable barrier layer. The web comprises a first outer cellulosic ply, a second outer cellulosic ply and an inner non-woven impermeable ply. The plies are passively bonded to one another. According to the specification of this prior art document, "passively bonded" means bonded without the use of adhesive, thermal or ultrasonic means, embossing or other active bonding means. When a non-woven sheet of smaller width dimension between the two outer cellulosic plies, the outer cellulosic plies may be joined at the edges at bonding regions such as by a strip of adhesive.

### Objects and Summary of the Invention

The object of the present invention is to produce a product which reduces or eliminates, either entirely or partly, the drawbacks mentioned above.

More specifically, the object of the present invention is to produce a multi-ply tissue paper product wherein distribution of the glue is optimized to join the plies adequately, with a reduction of the negative consequences of the glue on the characteristics of softness and/or on the absorption capacities of the product.

These and other objects and advantages which shall become apparent to those skilled in the art from reading the text below, are obtained in substance with a sheet product, according to claim 1 or to claim 2. Particularly advantageous embodiments of the invention are set forth in the dependent claims.

The sheet product is paper and specifically tissue paper, comprising at least two plies joined to each other by gluing, wherein at least one of the plies is embossed, characterized in that it has longitudinal edge areas or bands on which a greater amount of glue is applied with respect to at least an intermediate area, that is, an area disposed within the longitudinal edges of the product. In particular, according to the invention the edge areas have a higher percentage of glued surface with respect to the percentage of glued surface in the intermediate area or areas of the product.

The invention is based on the idea that to join the plies forming the finished product glue only requires to be distributed in areas, and that during use the paper product is utilized in different ways from area to area. The invention is thus based on the idea of reducing the quantity of glue in those areas where it can have a negative effect on the characteristics of softness and/or absorption capacities of the product, concentrating the presence of the glue mainly along the edge areas.

In fact, in the case of toilet paper, for example, it is always used prevalently in the central area of the sheets of paper, while in normal use the edge areas are not utilized. Therefore, a quantity of glue concentrated on the edge areas does not reduce the characteristics of softness in the area of the product, which comes into contact with the user. On the other hand, the glue applied along the edges, or prevalently along the edges, guarantees optimum joining of the plies.

Also in the case of kitchen towels, the presence of glued longitudinal edge areas and intermediate areas devoid of glue or in any case having a smaller quantity of glue attains the aforesaid advantages of increased softness and absorption capability with respect to traditional products, thanks to the reduction in the quantity of glue especially in the intermediate areas, that is, in the central areas of the product.

In the specific case of kitchen towels, it is advantageous to provide supplementary glued areas, having an extension essentially parallel to the longitudinal edges, so that the finished product in substance has more than two glued bands or areas disposed along the longitudinal edges and in intermediate positions with respect to the transverse extension of the product. By producing these areas wherein gluing is concentrated by means of more evident embossing, for example, linear embossings with greater height with respect to micro-embossing distributed over the entire remaining surface of the product, the kitchen towel can attain further advantages. In fact, the presence of areas with more evident and glued embossing increases grip of the hand on the sheet of paper resulting in an increased cleaning effect, useful when the product is used, for example, to clean or dry the surfaces of furniture, dishes or other objects. The presence of embossings in a central area of the product, especially if obtained with continuous instead of discontinuous projections, makes it possible to obtain a sort of scoring effect and thus invites folding of each sheet of kitchen towel, with further advantages during use.

Gluing along the edges, especially if obtained by means of micro-embossing or embossing according to continuous lines or projections, can also be used as a sort of lateral closure of the multi-ply product, to allow products of various types to be inserted and retained between the plies. For example, between the plies an absorbent or super-absorbent material can be inserted, in the form of fibers, granules, powder or the like. Suitable super-absorbent materials typically those used in the production of sanitary napkins, baby diapers or other similar products. These materials are often polymer-based. Preferably, in particular when web product is a kitchen towel or a wiper, the super-absorbent material is of edible type.

According to a different aspect, the invention relates to a sheet product wound in a roll, for example toilet paper or kitchen towels, with two or more plies joined by gluing, preferably at least partly embossed, characterized in that it has longitudinal areas or bands which contain quantities of glue varying area to area, that is longitudinal areas with different quantities of glue per surface unit.

Further advantageous characteristics and embodiments of the product according to the invention are indicated in the appended claims and shall be described in greater detail with reference to some examples of embodiment illustrated in detail hereunder.

### Brief description of the drawings

The invention will be better understood by following the description and accompanying drawings which show preferred although non-limiting embodiments of the invention. More specifically, in the drawing:
Figure 1 shows a roll or log of considerable axial length which, after being cut orthogonally to the longitudinal axis thereof, is divided into a plurality of rolls destined for final use;
Figure 2 shows a plan view of a portion of a roll of toilet paper produced according to the invention;
Figure 3 shows a variant of embodiment of the toilet paper in Figure 2;
Figures 4 to 11. show greatly enlarged schematic cross sections of a toilet paper type product produced according to the invention;
Figure 12 shows a plan view of a portion of a roll of kitchen towel according to the invention;
Figures 13 to 16 show greatly enlarged schematic cross sections of a kitchen towel type product produced according to the invention in various embodiments;
Figure 17 shows a diagram of an embossing and laminating unit to obtain a product according to the invention;
Figure 18 shows a greatly enlarged schematic cross section of a further embodiment of the invention; and Figs. 19 and 20 show a schematic front view of possible embossing patterns along the edges of web sheet material, particularly suitable for retaining material in powder or fiber form between the plies forming the sheet material.

### Detailed description of preferred embodiments of the invention

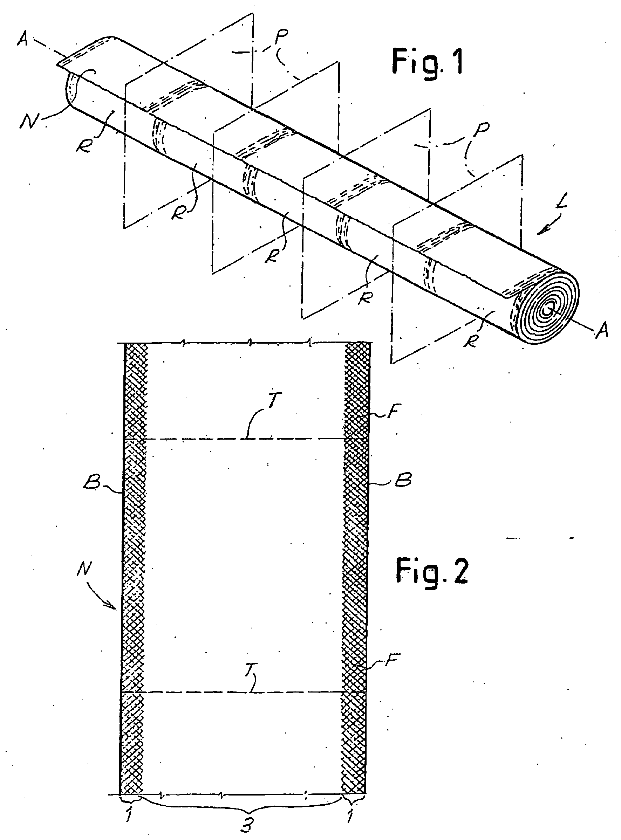

Figure 1 shows a log, that is, a roll of considerable axial length, delivered from a rewinding machine, located downstream of an embossing unit which performs, on the tissue paper web material or the like, differentiated embossing with differentiated gluing to obtain the objects mentioned above. The log, indicated as a whole with L, will subsequently be cut orthogonally to the axis A-A thereof, to be divided into a plurality of rolls R of a smaller axial length, corresponding to the final dimension of the product destined for use. The ends of the log have been trimmed to eliminate the irregular portion which forms in this end area during winding.

As shown schematically in Figure 1 and illustrated in greater detail hereunder by a series of examples of embodiment, the web material indicated as a whole with N of which the log L is composed is embossed differentially with areas with increased embossing at the level of cutting planes P indicated with a dashed line in Figure 1, along which the logs will be cut to be divided into individual rolls R.

Figure 2 shows a length of toilet paper formed by web material N wound on a roll R obtained by transverse cutting of the log L in Figure 1.

The web material N is formed by two or more plies glued to one another as will be described with reference to the following figures. Transverse incision or perforation lines T divide the web material N into single sheets F destined for final use. Along the longitudinal edges B of the web material N are two longitudinal edge areas indicated with 1, concentrated in which is all or most of the glue that joins the plies forming the web material N. Between the two longitudinal edge areas 1 is an intermediate area 3 essentially devoid of glue or, in particular cases, with a smaller quantity of glue compared to the glue applied along the edge areas 1.

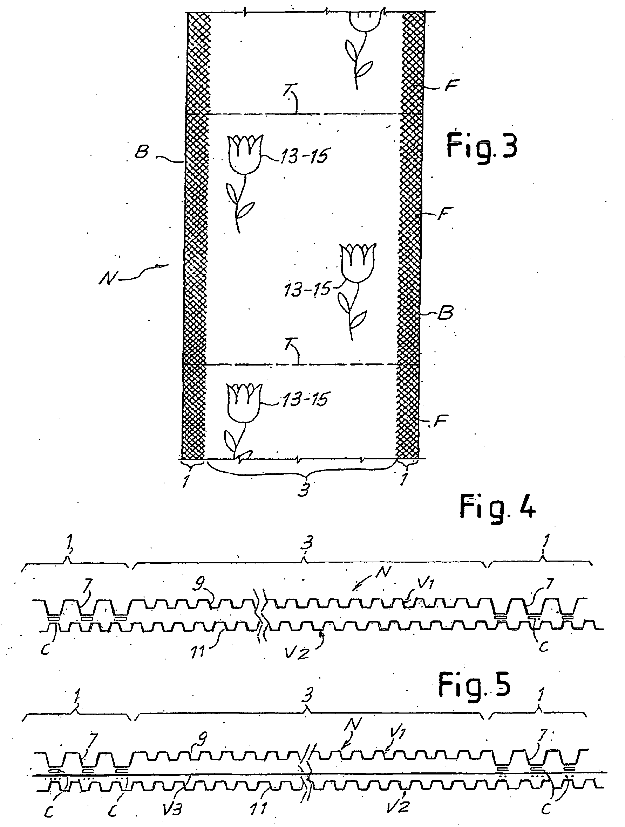

Figures 4 to 10 show various forms that can be taken by the web material N in a greatly enlarged schematic cross section. With initial reference to Figure 4, in this case the web material is formed by two plies V1 and V2 of tissue paper. The ply V1 has, along the Longitudinal edge areas 1, first embossing formed by geometrically shaped protuberances 7 of considerable dimensions. Typically, the protuberances 7 can be distributed with a density ranging from 3 to 15 protuberances/cm², it however being understood that these values are not limiting. The height of the protuberances can be in the range of 0.1-2 mm, although also in this case the values are provided purely as a non-limiting indication. In the intermediate area 3 the ply V1 is provided with micro-embossing 9 formed by protuberances of greater density and lesser dimensions, in particular of lesser height, with respect to the protuberances 7 of the first embossing.

A glue C is applied to the front surfaces (facing the inside of the web material N) of the protuberances 7 of the first embossing, to allow the ply V1 to adhere to the underlying ply V2. The latter is provided with micro-embossing formed by a series of small protuberances 11, which can have dimensions equivalent to the protuberances 9 forming the micro-embossed central or intermediate area 3 of the ply V1.

Reciprocal gluing of the two plies V1 and V2 consequently occurs in the longitudinal edge areas 1, wherein the glue C applied to the protuberances 7 is concentrated. The intermediate area 3 of the product is devoid of glue. This area is the area, which - in normal use of toilet paper - comes into contact with the hands and body of the user. The absence of glue in this area guarantees maximum softness and absorbent power, while the glue C applied along the edges does not impair these characteristics in those bands or areas of the product which are practically unused, while guaranteeing sufficient reciprocal adhesion of the plies.

Figure 5 shows a variant of embodiment of the product in Figure 4. The same numbers indicated identical or equivalent parts to those in the example in Figure 4. The web product N is composed in this case of three plies, of which the external plies V1 and V2 are embossed as described above, while the intermediate ply V3 is devoid of embossing. The glue C applied to the front surfaces of the protuberances 7 in the longitudinal edge areas 1 seeps through the intermediate ply V3 and allows reciprocal bonding of the three plies.

The products produced as illustrated in Figures 4 and 5 can be obtained with embossing and laminating units of known type not described herein. For example, an embossing and laminating device of the type disclosed in US patent n. 6,755,928 and in US patent n. 6.681.826 can be used.

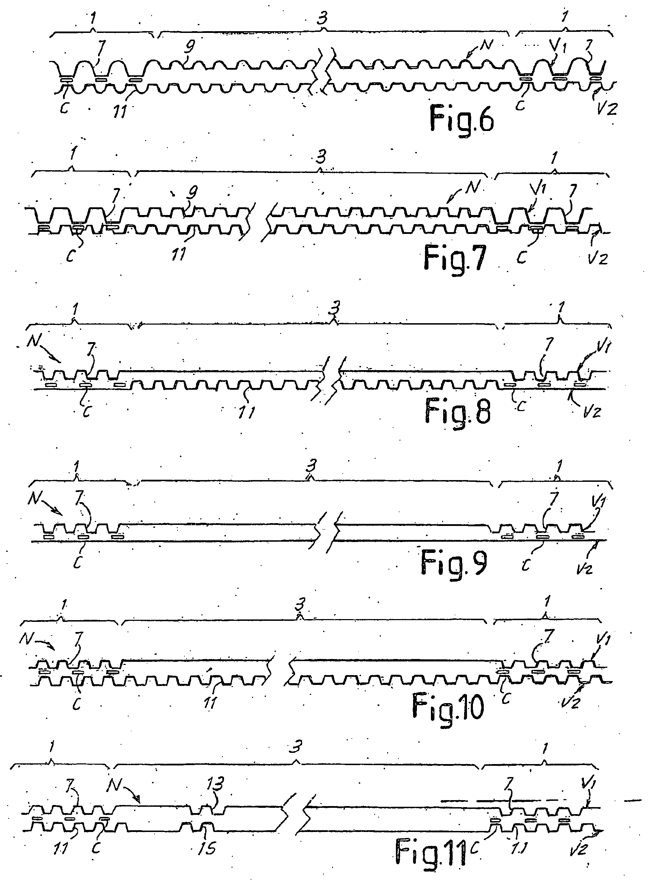

The products illustrated in Figures 4 and 5 are typically embossed according to discontinuous tips or protuberances, for example frusto-conical shaped or frusto-pyramidal shaped protuberances, according to known techniques. However, it would also be possible to produce the product according to the invention with other forms of embossing. For example and in particular, embossing can be produced according to continuous lines, that is, with continuous protuberances with a linear and prevalently rectilinear extension. This is the case of the product illustrated schematically in Figure 6, where identical or equivalent parts are indicated with the same reference numbers as Figure 4. The protuberances 7, 9 and 11 are composed in this case of lines of parallel protuberances, or slightly inclined with respect to the edges of the web material N. The finished product will therefore have the appearance of a lined product rather than a product embossed with points. Also in this case, the glue C is applied to the protuberances (again indicated with 7) with greater dimensions produced along the longitudinal edge areas 1 of the web material N, while lines with lesser dimensions, and in particular of lesser height, are produced in the central or intermediate area 3, distributed with a denser pitch and devoid of glue. The underlying ply V2 is produced with a series of linear protuberances 11 with dimensions and pitch essentially equivalent to those of the lines forming the embossing 9.

The linear embossing 9 and 11 could be replaced by micro-embossing with a frusto-pyramidal or frusto-conical shape, that is, discontinuous rather than continuous.

The product in Figure 6 could also be provided with a third smooth, that is, unembossed, intermediate ply V3.

Figure 7 shows a modified embodiment of the product in Figure 4. In this case, along the longitudinal edge areas 1 the ply V2 is compressed at the areas in which the glue C is applied, that is, at the front surfaces of the protuberances 7. This is obtained by laminating the two plies V1, V2 after applying the glue between an embossing roller which produced the embossings 7 and 9 and on which the ply V1 is still adhering, and a prevalently smooth lamination roller which defines a lamination nip together with the embossing roller which embossed the ply V1, through which nip the plies V1 and V2 are fed. The lamination roller can be coated in a rubber of appropriate rigidity to obtain re-embossing of the ply V2 at the level of the protuberances 7, with the depth of said re-embossing varying according to the softness of the laminating roller.

The product in Figure 7 can also be provided with a third intermediate ply, which in this case would be embossed lightly through the effect of the yield of the laminating roller along the longitudinal edge areas 1 in which the glue C joins the plies together.

Figure 8 shows - again in a greatly enlarged schematic cross section - a web product N such as toilet paper formed by two plies V1 and V2. The ply V1 is embossed along the longitudinal edge areas 1, wherein it has protuberances again indicated with 7. In this example the protuberances have lesser dimensions (especially height) with respect to the dimensions of the protuberances 7 of the previous embodiments. In fact, this can be a micro-embossing, for example with protuberances having a density of around 15-100 protuberances/cm² and preferably 20-40 protuberances/cm². The height of the protuberances 7 can be around 0.1-0.5 mm, preferably 0.1-0.3 mm, although these sizes should not be considered as limiting.

A glue C is applied to the front surface of the micro-embossings 7 to join the ply V1 to the ply V2. The intermediate area 3 of the ply V1 is devoid of embossings and devoid of glue.

In this example the ply V2 is smooth in the edge area 1 and embossed with micro-embossing formed by protuberances indicated again with 11 in the intermediate area 3. The density and dimensions of the protuberances 11 can, for example, be comparable to those of the protuberances 7. The two plies V1 and V2 can be joined by lamination by means of a zone laminating roller, i.e. having annular bands, which act against an embossing roller that produces the protuberances 7. The ply V1, still adhering to and engaged with the embossing roller, and the ply V2 previously embossed in the band or intermediate area 3 by a separate embossing unit, are fed through the nip between the embossing roller and the laminating roller.

Figure 9 shows a web material N similar to the one in Figure 8 wherein, however, the lower ply V2 is completely devoid of embossing.

The web material N in Figure 10 is similar to the product in Figures 8 and 9, but the lower ply V2 is typically embossed with micro-embossing formed by protuberances 11 along its entire extension, while the ply V1 is embossed with micro-embossing solely in the longitudinal edge areas 1 and also in this case the glue is applied along the aforesaid longitudinal areas 1.

Figure 11 shows a web product N formed once again by two plies V1 and V2 in a modified embodiment. In this case, besides the protuberances 7 and 11, which are produced in the longitudinal edge areas 1 on both plies V1 and V2 (and which can be micro-embossing protuberances), embossing protuberances 13, 15 are provided in the ply V1 and in the ply V2 at the level of the intermediate area 3. These protuberances can be coincident or staggered and can either be provided with glue or devoid of glue. The glue to join the plies is in any case applied along the longitudinal edge areas, as described in the previous examples. The protuberances 13, 15 can have an exclusively decorative function or contribute towards reciprocal bonding of the plies V1, V2, without this impairing the characteristics of softness and high absorption capacity concentrated in the intermediate area 3 of the product, thanks to the low percentage incidence of the glued surface represented by the front surfaces of the protuberances 13, 15. Any glue applied to the protuberances 13 and/or 15 can also be a colored glue to give the finished product a particular aesthetic effect

Figure 3 shows, in a plan view, a portion of the web product N produced with this configuration. In the central or intermediate area 3 essentially devoid of glue, the web product N has flowery decorative patterns formed by the embossing protuberances 13, 15. As shown by way of example in Figure 3, these patterns are extremely sparse and therefore - even if provided with glue - do not negatively influence the characteristics of the product to any appreciable extent.

In the examples of embodiment described above reference is always made to a toilet paper type product, although as mentioned before the concept on which the invention is based can also be applied to other tissue paper products wound in rolls, such as kitchen towels.

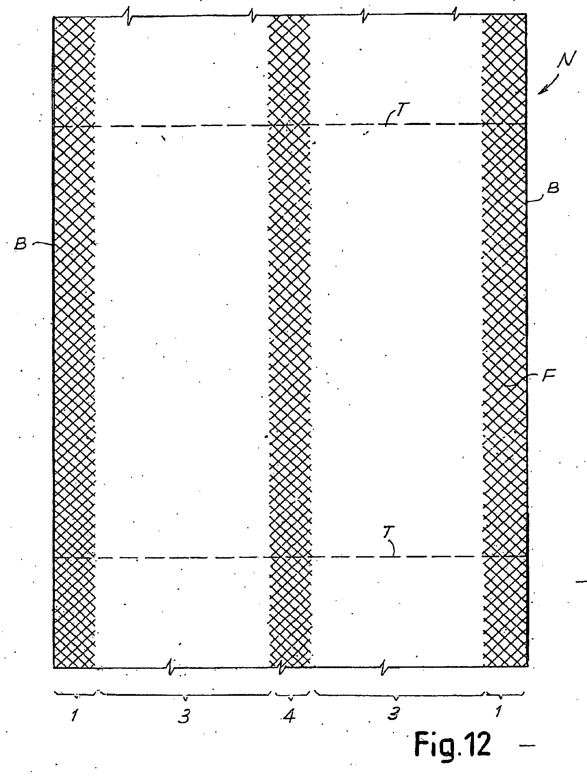

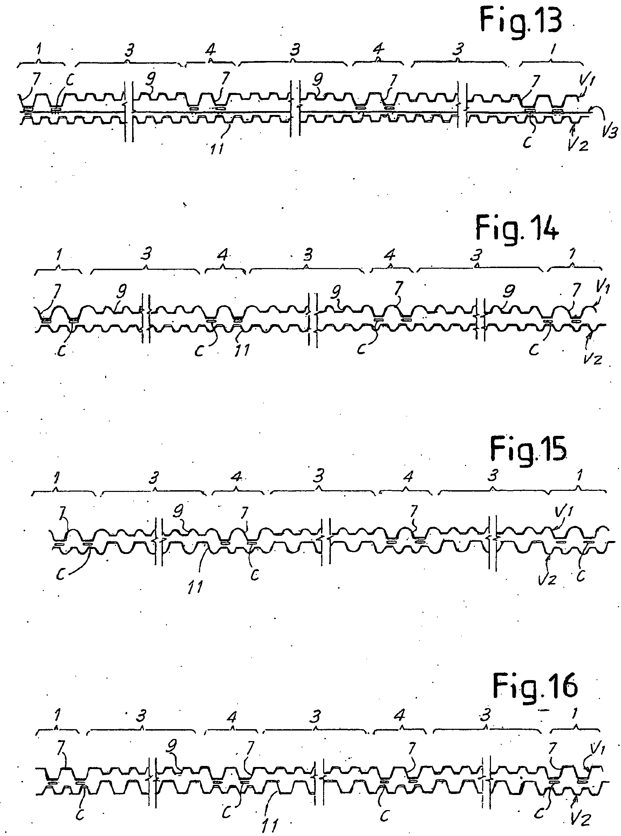

Figure 12 shows a plan view of a portion of web material coming from a roll of kitchen towel. The same reference numbers indicate identical or equivalent parts to those illustrated in Figures 1 and 3. In the example in Figure 12 it can be seen that this product differs from the product in Figures 1 and 2 essentially due to the greater length of each sheet F into which the web material N is divided by the transverse perforation lines T. Moreover, in the example in Figure 12, besides the two longitudinal edge areas 1, the web material N has a supplementary glued area 4, essentially parallel to the longitudinal edge areas 1. Two areas 3 essentially devoid of glue are defined between each longitudinal edge area 1 and the supplementary central glued area 4. As shall be explained with reference to the embodiments illustrated schematically in Figures 13 to 16, in practice the supplementary gluing areas 4 can also be more than one.

Figure 13 shows as an example a greatly enlarged schematic cross section of a web material N produced with a first ply V1, a second ply V2 and a third intermediate ply V3 essentially devoid of embossing. The ply V1 has longitudinal edge areas 1 embossed with a first embossing formed by protuberances 7 on the front surfaces whereof the glue C is applied. In this example there are also two supplementary gluing areas 4, in which the ply V1 is again embossed with protuberances, indicated once again with 7, with dimensions (in particular height) essentially the same as the protuberances 7 of the longitudinal edge areas 1. Glue C is also applied to these protuberances 7 in the supplementary intermediate areas 4. The lower ply V2 has essentially uniform embossing or micro-embossing formed by protuberances 11. Lamination in an appropriate lamination nip of the plies V1, V2 and V3 causes reciprocal gluing, also thanks to the glue C seeping through the ply V3 in the longitudinal edge areas 1 and in the supplementary intermediate areas 4. Conversely, the areas 3 are devoid of glue.

Figure 14 shows a product analogous to the one in Figure 13, devoid of the intermediate ply V3 and produced with linear protuberances instead of the interrupted protuberance of Figure 13, which can be of the frustum-pyramidal or frustum-conical shaped type. It will be understood that an intermediate ply V3 can also be provided in the web product N in Figure 14 and that the intermediate ply V3 in Figure 13 can be omitted.

Figures 15 and 16 show two embodiments of the web material, wherein the embossing protuberances of the various areas into which the web material N is divided differ in form. In the example in Figure 15 these are linear protuberances, i.e. formed by continuous embossing lines parallel to the edges B of the web material N or slightly inclined with respect thereto, while in the example in Figure 16 these are frustum-conical or frustum-pyramidal shaped protuberances, i.e. discontinuous, protuberances. In both cases the embossing areas 1 and 4 are identified on the ply V1 with protuberances of a greater height provided with glue C, while the intermediate areas 3 are provided with embossing protuberances with lesser dimensions and lesser density, devoid of glue. The ply V2 is embossed in an essentially complementary way, that is, with micro-embossings, or in any case embossings of lesser height and increased density at the level of the longitudinal edge areas 1 and of the supplementary gluing areas 4, and protuberances of greater height and decreased density in the intermediate areas 3.

As clearly indicated in the sections of Figures 15 and 16, this particular arrangement makes it possible to obtain an essentially uniform apparent thickness in the overall web product N. This facilitates winding of the web material and formation of logs and therefore rolls of an essentially uniform thickness. In addition or alternatively to this, to obtain the same object, in all the cases, a calendering unit can also be provided downstream of ply joining, composed of a pair of essentially smooth rollers with an essentially constant diameter, disposed at a distance whereat the composite sheet, formed by two or more laminated plies, is subject to calendering to uniform the thickness of the composite sheet on the entire surface thereof.

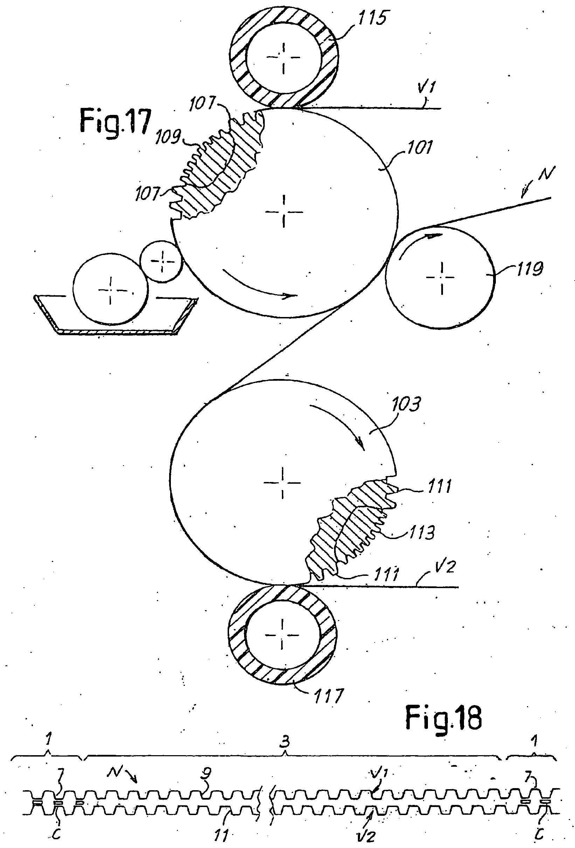

Figure 17 schematically shows an embossing-laminating unit to produce a web product of the type shown in Figure 16. Two steel embossing rollers are shown with 101 and 103, provided with protuberances 107, 109 for the roller 101 and 111, 113 for the roller 103. The protuberances 107 and 111 have a lesser density and greater dimensions (in particular height), while the protuberances 109 and 113 have lesser height and greater density. The ply V1 is embossed by the cylinder or embossing roller 101 and a pressure roller 115 coated with rubber or another yielding material, while the ply V2 is embossed between a second pressure roller 117 and the embossing roller or cylinder 103. The sectioned areas of the embossing rollers are shown according to different section planes, as represented schematically with different hatching, as the protuberances of different dimension provided on these rollers are disposed in areas staggered axially along the extension of the rollers, as is apparent in from the section in Figure 16.

Disposed along the circumferential extension of the embossing roller 101 is a laminating roller 119, for example coated in a rubber with less yield than the coating of the rollers 115 and 117. The roller 119 cooperates with the embossing roller 101 and causes reciprocal lamination of the plies V1 and V2 at the level of the protuberances of greater height 107 provided on the embossing roller 101. The hardness of the coating of the laminating roller 119 is such that it does not compress the protuberances 9 and 11 produced in the areas 3 devoid of glue of the web material N. On the other hand, through the effect of lamination the protuberances at the level of the areas 1 and 4 are compressed against the protuberances 7 formed by the tips or protuberances 107 of the embossing roller 101.

The laminating roller 119 can be produced in bands, that is, areas with a greater diameter, which perform lamination of the longitudinal edge areas 1 and, optionally, of the supplementary central or intermediate areas 4, of the web material, without compressing the intermediate areas which, being devoid of glue, do not require to be laminated.

Figure 17 shows a device in which the embossing rollers are provided with discrete protuberances, although it is understood that alternatively they can be provided with linear protuberances, that is, in the form of annular or helical projections, to produce the products shown in Figures 6, 14 and 15 or other equivalent products.

The schematic sections described and illustrated above are to be considered purely exemplificative, it being apparent that the same inventive concept can be produced in various ways and with various arrangements, without departing from the principle of producing a multi-ply web material wound in a roll, divided into individual sheets F by transverse perforation lines T, wherein the glue is prevalently or exclusively concentrated in edge areas and, optionally, in one or more supplementary intermediate gluing areas between the two edges of the material.

For example, while in the examples illustrated above reference has always been made to products wherein the bands or lateral edge areas are embossed with a greater height than the central areas, it must be understood that this condition is not essential to obtain non-uniform distribution of glue, with concentration which is greater along the edges and lesser in the center. In fact, this result can be obtained even if the ply which receives the glue has embossing of uniform height along the entire extension thereof. In this case, concentration of glue in the lateral edge areas and, optionally, in one or more intermediate areas, can be obtained with an appropriate configuration (in annular bands) of the glue dispensing roller. In this case, a product of the type shown schematically in the section in Figure 18 is obtained. The same numbers indicate identical or equivalent parts to those in the previous figures. The protuberances 7 and 9 have in this case the same height, but only the protuberances 7 have been received the glue C, thanks to the use of a cliché type glue roller or the like.

In the case in which the area essentially devoid of glue has an embossed decoration, this can also be produced with a combination of protuberances of two or more different heights, as known in the art, preferably of lesser height than the protuberances along the edge areas, which are the only ones to receive glue.

In the above text and in the appended claims, it must be understood that edge areas are not necessarily intended as areas which reach the final lateral limit of the product. In other words, although applied with greater concentration (or exclusively) in the edge areas, the glue might not stretch to the final lateral limit of the product, instead leaving a thin longitudinal strip devoid of glue on each of the longitudinal edges of the product. This can be obtained with a cliché type glue applicator roller, which has areas devoid of glue along bands which, in the final product, extend along the longitudinal edges. This is advantageous especially in the case wherein the product is wound in rolls obtained from cutting logs of considerable axial length. In fact, in this case logs can be produced wherein the thin strips at the level of the cutting planes (along which the log is cut by the blade of the cutting machine to be divided into individual rolls) are devoid of glue. This circumstance offers the advantage of reducing or eliminating drawbacks deriving from interaction of the blade with the glue. This advantage is also obtained in the case in which the sheet product is divided into longitudinal strips of a width corresponding to the width of the finished product before being wound in rolls, in a slitter-rewinder.

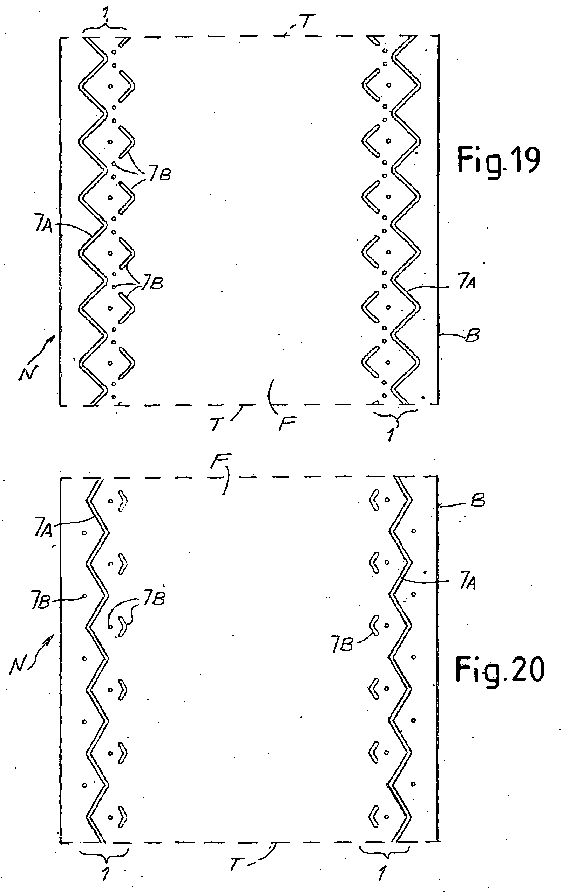

Figs. 19 and 20 show schematic front views of two different embodiments of an embossing and gluing pattern which is particularly suitable when between the plies V1 and V2 forming the web material N a material in powder, fiber or granular form is arranged, such as for example a super-absorbent material, such as a super-absorbent polymer. In these figures the same reference numbers designate parts identical or equivalent to those shown in the previous figures. Along the two edge areas 1 of each sheet F into which the web material N is subdivided by the perforation and tearing lines T, embossing patterns are provided, which are formed by two distinct kind of protuberances designated 7A and 7B. Besides these protuberances which are obtained by embossing as disclosed above, and at the level of which glue is applied, micro-embossing protrusions may be provided which can be distributed over the entire surface of the plies. The protrusions 7A have a linear and continuous development; thus they form a continuous barrier along the entire longitudinal extension of the web material, preventing the powder or similar material retained between the plies V1, V2 from escaping. Conversely, the protrusions 7B are discontinuous and have mainly an ornamental function. The area between two edge regions 1, i.e. bridging the edges B of the weblike material are advantageously devoid of super-absorbent material between the plies (since it is the central area rather than the edge areas of the product which is actually used), in order to avoid dispersion of the material in the environment as well as problems during cutting of the logs L into rolls R (Fig.1).

## Claims

1. A tissue paper sheet product (N) wound in a roll, comprising at least two plies (V1, V2) joined to each other by gluing, at least one of which is embossed, wherein longitudinal edge areas (1) of said sheet product are provided with a greater quantity of glue with respect to at least an intermediate area (3), which is devoid of glue or essentially devoid of glue or provided with a smaller quantity of glue compared to the glue applied along the edge areas, said glue being applied only to the front surface of embossed protuberances (7) of said at least one embossed ply; and wherein the glue (C) applied to the protuberances allows the plies (V1, V2) to adhere to each other.

2. A tissue paper sheet product (N) wound in a roll, comprising a first external ply (V1), a second external ply (V2) and an intermediate ply (V3), the external plies (V1, V2) being embossed, the plies being joined to each other by gluing, wherein longitudinal edge areas (1) of said sheet product are provided with a greater quantity of glue with respect to at least an intermediate area (3), said glue being applied only to the front surfaces of embossed protuberances (7) of said first external embossed ply; and wherein the glue (C) applied to the protuberances glue said first external embossed ply to said intermediate ply (V3) through which the glue seeps allowing reciprocal bonding of said three plies (V1, V2, V3).

3. Product as claimed in claim 1 or 2, wherein all the plies (V1, V2, V3) forming said sheet product (N) have the same width.

4. Product as claimed in claim 1 or 2 or 3, **characterized in that** said edge areas(1) have a greater percentage of glued surface than said at least one intermediate area (3).

5. Product as claimed in one or more of the previous claims, **characterized in that** it has perforated tearing lines (T) transverse with respect to the product wound in a roll and to the longitudinal edge areas (1)

6. Product as claimed in one or more of the previous claims, **characterized in that** it comprises at least a supplementary glued area (4), internal to the edge areas (1), with a greater quantity of glue with respect to said at least one intermediate area (3).

7. Product as claimed in claim 6, **characterized in that** said supplementary glued area (4) is in an approximately central position between the longitudinal edge areas (1); and that defined between said supplementary area (4) and said edge areas (1) are two intermediate areas (3) devoid of glue or having a lesser percentage of glued surface with respect to said supplementary area and said edge areas.

8. Product as claimed in one or more of the previous claims, **characterized in that** in said edge areas (1) and, optionally, in said supplementary glued area (4), at least one of said plies has embossing according to continuous or discontinuous annular embossing lines.

9. Product as claimed in one or more of the previous claims, **characterized in that** in said edge areas (1) and, optionally, in said supplementary glued area (4) at least one of said plies has embossing according to continuous or discontinuous helical embossing lines.

10. Product as claimed in claim 9, **characterized in that** said helical embossing lines have an inclination of no more than 30° and preferably no more than 10° with respect to the longitudinal edges.

11. Product as claimed in one or more of the previous claims, **characterized in that** in said at least one supplementary glued area (4) at least one of said plies is embossed.

12. Product as claimed in one or more of the previous claims, **characterized in that** reciprocal gluing areas of said plies (V1, V2, V3) are provided in said at least one intermediate area (3).

13. Product as claimed in one or more of claims 1 to 11, **characterized in that** in said at least one intermediate area (3) said plies are devoid of glue.

14. Product as claimed in one or more of the previous claims, **characterized in that** a first ply (V1) is embossed along said longitudinal edge areas (3) and devoid of embossing at the level of said at least one intermediate area (3).

15. Product as claimed in claim 14, **characterized in that** the second ply (V2) is embossed at the level of said at least one intermediate area (3) and devoid of embossing at the level of the longitudinal edge areas (1).

16. Product as claimed in claim 14, **characterized in that** the second ply (V2) is embossed at the level of the longitudinal edge areas (1).

17. Product as claimed in claim 14, **characterized in that** the second ply (V2) is entirely devoid of embossing..

18. Product as claimed in claim 14 or 16, **characterized in that** the second ply (V2) is embossed on the entire surface thereof.

19. Product as claimed in claim 2, **characterized In that** said third intermediate ply is devoid of embossing.

20. Product as claimed in one or more of the previous claims, **characterized in that** a first ply (V1) is provided with a first embossing (7) along said edge areas (1) and with a second embossing (9) at the level of said at least one intermediate area (3), the first embossing having continuous or discontinuous protuberances of a greater height with respect to the continuous or discontinuous protuberances of the second embossing.

21. Product as claimed in claim 20, **characterized in that** the protuberances of the first embossing (7) have a lesser density than the protuberances of the second embossing (9).

22. Product as claimed in one or more of the previous claims, **characterized in that** the second ply (V2) is provided with a third embossing along said edge areas (1), and with a fourth embossing at the level of said at least one intermediate area.

23. Product as claimed in claim 22, **characterized in that** said third embossing has continuous or discontinuous protuberances of a greater height with respect to the continuous or discontinuous protuberances of the fourth embossing.

24. Product as claimed in claim 23, **characterized in that** the protuberances of the third embossing have a lesser density than the protuberances of the fourth embossing.

25. Product as claimed in claim 22, 23 or 24, **characterized in that** the protuberances of the third embossing are disposed at the level of the protuberances of the first embossing of said first ply (V1) and are formed by a compression of the second ply at the level of the protuberances of the first embossing of the first ply.

26. Product as claimed in one or more of claims 22 to 25, **characterized in that** the third embossing provided on the second ply (V2) has continuous or discontinuous protuberances of a lesser height with respect to the continuous or discontinuous protuberances of the fourth embossing provided on said second ply (V2).

27. Product as claimed in claim 26, **characterized In that** the height of the protuberances of the first, second, third and fourth series of protuberances produced on the first and on the second ply are dimensioned to obtain an essentially uniform apparent thickness of the product over the entire width.

28. Product as claimed in at least claim 20, **characterized in that** the second ply (V2) has a third embossing (11) distributed uniformly over the entire surface, of lesser dimensions and greater density with respect to the first embossing (7) with which the first ply (V1) is provided, at the level of the edge areas (1).

29. Product as claimed in one or more of the previous claims, **characterized in that** bands devoid of glue or with a lesser quantity of glue are disposed between said longitudinal edge areas (1) and the external limit (B) of the product.

30. Product as claimed in one or more of the previous claims, **characterized in that** between said two plies a bulk material is provided, said bulk material being prevented from escaping by the longitudinal edge areas where the larger amount of glue is provided.

31. Product according to claim 30, **characterized in that** said bulk material is a powder and/orfiber and/or granular material.

32. Product according to claim 30 or 31, **characterized in that** said bulk material includes a super-absorbent material.

33. Product according to one or more of claims 30 to 32, **characterized in that** along said product gluing is provided by means of embossing or microembossing including at least a protrusion in the form of a substantially continuous line or projection.

## Patentansprüche

1. Bahnprodukt (N) aus Tissue-Papier, das als Rolle gewickelt ist, wobei es mindestens zwei Lagen (V1, V2) umfasst, die durch Kleben miteinander verbunden sind, wovon mindestens eine geprägt ist, wobei Längsrandbereiche (1) des Bahnprodukts mit einer größeren Menge an Klebstoff versehen sind als mindestens ein mittlerer Bereich (3), der frei von Klebstoff oder im Wesentlichen frei von Klebstoff ist oder der im Vergleich zu dem entlang der Randbereiche aufgebrachten Klebstoff mit einer geringeren Menge an Klebstoff versehen ist, wobei der Klebstoffnur auf die Frontseite geprägter Erhebungen (7) der mindestens einen geprägten Lage aufgebracht ist und wobei der Klebstoff (C), der auf die Erhebungen aufgebracht ist, das Haften der Lagen (V1, V2) aneinander ermöglicht.

2. Bahnprodukt (N) aus Tissue-Papier, das als Rolle gewickelt ist, wobei es eine erste äußere Lage (V1), eine zweite äußere Lage (V2) und eine mittlere Lage (V3) umfasst, wobei die äußeren Lagen (V1, V2) geprägt sind, wobei die Lagen durch Verkleben miteinander verbunden sind, wobei Längsrandbereiche (1) des Bahnprodukts mit einer größeren Menge an Klebstoff versehen sind als mindestens ein mittlerer Bereich (3), wobei der Klebstoff nur auf die Frontseiten von geprägten Erhebungen (7) der ersten äußeren geprägten Lage aufgebracht ist und wobei der Klebstoff (C), der auf die Erhebungen aufgebracht ist, die erste äußere geprägte Lage mit der mittleren Lage (V3) verklebt, durch welche der Klebstoff hindurchsickert, wodurch ein Aneinanderkleben der drei Lagen (V1, V2, V3) ermöglicht wird.

3. Produkt nach Anspruch 1 oder 2, wobei alle Lagen (V1, V2, V3), die das Bahnprodukt (N) bilden, die gleiche Breite aufweisen.

4. Produkt nach Anspruch 1 oder 2 oder 3, **dadurch gekennzeichnet, dass** die Randbereiche (1) einen größeren prozentualen Anteil von mit Klebstoff versehener Oberfläche aufweisen als der mindestens eine mittlere Bereich (3).

5. Produkt nach einem oder mehreren der vorhergehenden Ansprüche, **dadurch gekennzeichnet, dass** dieses perforierte Reißlinien (T) quer zu dem als Rolle gewickelten Produkt und zu den Längsrandbereichen (1) aufweist.

6. Produkt nach einem oder mehreren der vorhergehenden Ansprüche, **dadurch gekennzeichnet, dass** dieses mindestens einen weiteren mit Klebstoff versehenen Bereich (4) innenseitig der Randbereiche (1) aufweist, der eine größere Menge an Klebstoff als der mindestens eine mittlere Bereich (3) aufweist.

7. Produkt nach Anspruch 6, **dadurch gekennzeichnet, dass** sich der weitere mit Klebstoff versehene Bereich (4) in etwa in zentraler Lage zwischen den Längsrandbereichen (1) befindet und dass zwischen dem weiteren Bereich (4) und den Randbereichen (1, 2) zwei mittlere Bereiche (3) vorhanden sind, die frei von Klebstoff sind oder einen geringeren Anteil an mit Klebstoff versehener Oberfläche aufweisen als der weitere Bereich und die Randbereiche.

8. Produkt nach einem oder mehreren der vorhergehenden Ansprüche, **dadurch gekennzeichnet, dass** in den Randbereichen (1) und optional in dem weiteren mit Klebstoff versehenen Bereich (4) mindestens eine der Lagen eine Prägung entsprechend kontinuierlichen oder diskontinuierlichen ringförmigen Prägelinien aufweist.

9. Produkt nach einem oder mehreren der vorhergehenden Ansprüche, **dadurch gekennzeichnet, dass** in den Randbereichen (1) und optional in dem weiteren mit Klebstoff versehenen Bereich (4) mindestens eine der Lagen eine Prägung entsprechend kontinuierlichen oder diskontinuierlichen spiralförmigen Prägelinien aufweist.

10. Produkt nach Anspruch 9, **dadurch gekennzeichnet, dass** die spiralförmigen Prägelinien eine Neigung von nicht mehr als 30° und vorzugsweise nicht mehr als 10° in Bezug auf die Längsränder aufweisen.

11. Produkt nach einem oder mehreren der vorhergehenden Ansprüche, **dadurch gekennzeichnet, dass** in dem mindestens einen weiteren mit Klebstoff versehenen Bereich (4) mindestens eine der Lagen geprägt ist.

12. Produkt nach einem oder mehreren der vorhergehenden Ansprüche, **dadurch gekennzeichnet, dass** in dem mindestens einen mittleren Bereich (3) wechselseitig mit Klebstoff versehene Bereiche der Lagen (V1, V2, V3) vorhanden sind.

13. Produkt nach einem oder mehreren der Ansprüche 1 bis 11, **dadurch gekennzeichnet, dass** in dem mindestens einen mittleren Bereich (3) die Lagen frei von Klebstoff sind.

14. Produkt nach einem oder mehreren der vorhergehenden Ansprüche, **dadurch gekennzeichnet, dass** eine erste Lage (V1) entlang der Längsrandbereiche (1) geprägt ist und auf der Höhe des mindestens einen mittleren Bereichs (3) keine Prägung aufweist.

15. Produkt nach Anspruch 14, **dadurch gekennzeichnet, dass** die zweite Lage (V2) auf der Höhe des mindestens einen mittleren Bereichs (3) geprägt ist und auf der Höhe der Längsrandbereiche (1) keine Prägung aufweist.

16. Produkt nach Anspruch 14, **dadurch gekennzeichnet, dass** die zweite Lage (V2) auf der Höhe der Längsrandbereiche (1) geprägt ist.

17. Produkt nach Anspruch 14, **dadurch gekennzeichnet, dass** die zweite Lage (V2) keinerlei Prägung aufweist.

18. Produkt nach Anspruch 14 oder 16, **dadurch gekennzeichnet, dass** die zweite Lage (V2) über die gesamte Fläche hin geprägt ist.

19. Produkt nach Anspruch 2, **dadurch gekennzeichnet, dass** die dritte, mittlere Lage keine Prägung aufweist.

20. Produkt nach einem oder mehreren der vorhergehenden Ansprüche, **dadurch gekennzeichnet, dass** eine erste Lage (V1) eine erste Prägung (7) entlang der Randbereiche (1) und eine zweite Prägung (9) auf der Höhe des mindestens einen mittleren Bereichs (3) aufweist, wobei die erste Prägung kontinuierliche oder diskontinuierliche Erhebungen mit einer größeren Höhe als die kontinuierlichen oder diskontinuierlichen Erhebungen der zweiten Prägung aufweist.

21. Produkt nach Anspruch 20, **dadurch gekennzeichnet, dass** die Dichte der Erhebungen der ersten Prägung (7) geringer als diejenige der Erhebungen der zweiten Prägung (9) ist.

22. Produkt nach einem oder mehreren der vorhergehenden Ansprüche, **dadurch gekennzeichnet, dass** die zweite Lage (V2) mit einer dritten Prägung entlang der Randbereiche (1) und mit einer vierten Prägung auf der Höhe des mindestens einen mittleren Bereichs versehen ist.

23. Produkt nach Anspruch 22, **dadurch gekennzeichnet, dass** die dritte Prägung kontinuierliche oder diskontinuierliche Erhebungen mit einer größeren Höhe als die kontinuierlichen oder diskontinuierlichen Erhebungen der vierten Prägung aufweist.

24. Produkt nach Anspruch 23, **dadurch gekennzeichnet, dass** die Dichte der Erhebungen der dritten Prägung geringer als diejenige der Erhebungen der vierten Prägung ist.

25. Produkt nach Anspruch 22, 23 oder 24, **dadurch gekennzeichnet, dass** die Erhebungen der dritten Prägung auf der Höhe der Erhebungen der ersten Prägung der ersten Lage (V1) angeordnet sind und durch eine Kompression der zweiten Lage auf der Höhe der Erhebungen der ersten Prägung der ersten Lage gebildet sind.

26. Produkt nach einem oder mehreren der Ansprüche 22 bis 25, **dadurch gekennzeichnet, dass** die dritte Prägung, die auf der zweiten Lage (V2) vorgesehen ist, kontinuierliche oder diskontinuierliche Erhebungen mit einer geringeren Höhe als die kontinuierlichen oder diskontinuierlichen Erhebungen der vierten Prägung, die auf der zweiten Lage (V2) vorgesehen ist, aufweist.

27. Produkt nach Anspruch 26, **dadurch gekennzeichnet, dass** die Höhe der Erhebungen der ersten, zweiten, dritten und vierten Serie von Erhebungen, die auf der ersten und auf der zweiten Lage erzeugt sind, derart dimensioniert ist, dass über die gesamte Breite des Produkts eine im Wesentlichen einheitlich erscheinende Dicke erzielt wird.

28. Produkt nach mindestens Anspruch 20, **dadurch gekennzeichnet, dass** die zweite Lage (V2) eine dritte Prägung (11) aufweist, die gleichförmig über die gesamte Oberfläche verteilt ist, wobei sie geringere Abmessungen und eine größere Dichte als die erste Prägung (7) aufweist, mit der die erste Lage (V1) versehen ist, und zwar auf der Höhe der Randbereiche (1).

29. Produkt nach einem oder mehreren der vorhergehenden Ansprüche, **dadurch gekennzeichnet, dass** zwischen den Längsrandbereichen (1) und der Außenkante (B) des Produkts Streifen frei von Klebstoff oder mit einer geringeren Menge an Klebstoff angeordnet sind.

30. Produkt nach einem oder mehreren der vorhergehenden Ansprüche, **dadurch gekennzeichnet, dass** zwischen den zwei Lagen ein Füllmaterial vorhanden ist, wobei ein Austreten des Füllmaterials durch die Längsrandbereiche verhindert wird, in denen eine größere Menge an Klebstoff vorhanden ist.

31. Produkt nach Anspruch 30, **dadurch gekennzeichnet, dass** das Füllmaterial ein Pulver und/oder eine Faser und/oder ein granulöses Material ist.

32. Produkt nach Anspruch 30 oder 31, **dadurch gekennzeichnet, dass** das Füllmaterial ein hoch absorptionsfähiges Material umfasst.

33. Produkt nach einem oder mehreren der Ansprüche 30 bis 32, **dadurch gekennzeichnet, dass** entlang des Produkts eine Verklebung durch Prägung oder Mikroprägung gegeben ist, die mindestens einen Vorsprung in Form einer im Wesentlichen durchgängigen Linie oder Ausbuchtung umfasst.

## Revendications

1. Produit en feuille de papier mousseline (N) enroulé en un rouleau, comprenant au moins deux plis (V1, V2) assemblés l'un à l'autre par collage, au moins l'un des plis étant gaufré, dans lequel des zones de bord longitudinal (1) dudit produit en feuille sont pourvues d'une plus grande quantité de colle par rapport à au moins une zone intermédiaire (3), qui est dépourvue de colle ou sensiblement dépourvue de colle ou pourvue d'une plus petite quantité de colle comparé à la colle appliquée le long des zones de bord, ladite colle étant appliquée seulement sur la surface avant de protubérances gaufrées (7) dudit au moins un pli gaufré ; et dans lequel la colle (C) appliquée sur les protubérances permet aux plis (V1, V2) d'adhérer l'un à l'autre.

2. Produit en feuille de papier mousseline (N) enroulé en un rouleau, comprenant un premier pli extérieur (V1), un deuxième pli extérieur (V2) et un pli intermédiaire (V3), les plis extérieurs (V1, V2) étant gaufrés, les plis étant assemblés l'un à l'autre par collage, dans lequel des zones de bord longitudinal (1) dudit produit en feuille sont pourvues d'une plus grande quantité de colle par rapport à au moins une zone intermédiaire (3), ladite colle étant appliquée seulement sur les surfaces avant de protubérances gaufrées (7) dudit premier pli extérieur gaufré ; et dans lequel la colle (C) appliquée sur les protubérances colle ledit premier pli extérieur gaufré sur ledit pli intermédiaire (V3) à travers lequel la colle suinte permettant un collage mutuel desdits trois plis (V1, V2, V3).

3. Produit selon la revendication 1 ou 2, dans lequel tous les plis (V1, V2, V3) formant ledit produit en feuille (N) ont la même largeur.

4. Produit selon la revendication 1 ou 2 ou 3, **caractérisé en ce que** lesdites zones de bord longitudinal (1) ont un plus grand pourcentage de surface collée que ladite au moins une zone intermédiaire (3).

5. Produit selon une ou plusieurs des revendications précédentes, **caractérisé en ce qu'**il a des lignes de déchirure perforées (T) transversales par rapport au produit enroulé en un rouleau et aux zones de bord longitudinal (1).

6. Produit selon une ou plusieurs des revendications précédentes, **caractérisé en ce qu'**il comprend au moins une zone collée supplémentaire (4), à l'intérieur des zones de bord (1), ayant une plus grande quantité de colle par rapport à ladite au moins une zone intermédiaire (3).

7. Produit selon la revendication 6, **caractérisé en ce que** ladite zone collée supplémentaire (4) est dans une position approximativement centrale entre les zones de bord longitudinal (1) ; et **en ce que**, entre ladite zone collée supplémentaire (4) et lesdites zones de bord (1), sont définies deux zones intermédiaires (3) dépourvues de colle ou ayant un pourcentage inférieur de surface collée par rapport à ladite zone supplémentaire et auxdites zones de bord.

8. Produit selon une ou plusieurs des revendications précédentes, **caractérisé en ce que** dans lesdites zones de bord (1) et, en option, dans ladite zone collée supplémentaire (4), au moins un desdits plis a un gaufrage selon des lignes de gaufrage annulaires continues ou discontinues.

9. Produit selon une ou plusieurs des revendications précédentes, **caractérisé en ce que** dans lesdites zones de bord (1) et, en option, dans ladite zone collée supplémentaire (4), au moins un desdits plis a un gaufrage selon des lignes de gaufrage hélicoïdales continues ou discontinues.

10. Produit selon la revendication 9, **caractérisé en ce que** lesdites lignes de gaufrage hélicoïdales ont une inclinaison qui n'est pas supérieure à 30° et de préférence qui n'est pas supérieure à 10° par rapport aux bords longitudinaux.

11. Produit selon une ou plusieurs des revendications précédentes, **caractérisé en ce que** dans ladite au moins une zone collée supplémentaire (4), au moins l'un desdits plis est gaufré.

12. Produit selon une ou plusieurs des revendications précédentes, **caractérisé en ce que** des zones de collage mutuel desdits plis (V1, V2, V3) sont prévues dans ladite au moins une zone intermédiaire (3).

13. Produit selon une ou plusieurs des revendications 1 à 11, **caractérisé en ce que** dans ladite au moins une zone intermédiaire (3) lesdits plis sont dépourvus de colle.

14. Produit selon une ou plusieurs des revendications précédentes, **caractérisé en ce qu'**un premier pli (V1) est gaufré le long desdites zones de bord longitudinal (1) et dépourvu de gaufrage au niveau de ladite au moins une zone intermédiaire (3).

15. Produit selon la revendication 14, **caractérisé en ce qu'**un deuxième pli (V2) est gaufré au niveau de ladite au moins une zone intermédiaire (3) et dépourvu de gaufrage au niveau des zones de bord longitudinal (1).

16. Produit selon la revendication 14, **caractérisé en ce que** le deuxième pli (V2) est gaufré au niveau des zones de bord longitudinal (1).

17. Produit selon la revendication 14, **caractérisé en ce que** le deuxième pli (V2) est entièrement dépourvu de gaufrage.

18. Produit selon la revendication 14 ou 16, **caractérisé en ce que** le deuxième pli (V2) est gaufré sur toute sa surface.

19. Produit selon la revendication 2, **caractérisé en ce que** ledit troisième pli intermédiaire est dépourvu de gaufrage.

20. Produit selon une ou plusieurs des revendications précédentes, **caractérisé en ce qu'**un premier pli (V1) est pourvu d'un premier gaufrage (7) le long desdites zones de bord (1) et d'un deuxième gaufrage (9) au niveau de ladite au moins une zone intermédiaire (3), le premier gaufrage ayant des protubérances continues ou discontinues présentant une hauteur plus grande par rapport aux protubérances continues ou discontinues du deuxième gaufrage.

21. Produit selon la revendication 20, **caractérisé en ce que** les protubérances du premier gaufrage (7) ont une densité moins grande que les protubérances du deuxième gaufrage (9).

22. Produit selon une ou plusieurs des revendications précédentes, **caractérisé en ce que** le deuxième pli (V2) est pourvu d'un troisième gaufrage le long desdites zones de bord (1) et d'un quatrième gaufrage au niveau de ladite au moins une zone intermédiaire.

23. Produit selon la revendication 22, **caractérisé en ce que** ledit troisième gaufrage a des protubérances continues ou discontinues présentant une hauteur plus grande par rapport aux protubérances continues ou discontinues du quatrième gaufrage.

24. Produit selon la revendication 23, **caractérisé en ce que** les protubérances du troisième gaufrage ont une densité moins grande que les protubérances du quatrième gaufrage.

25. Produit selon la revendication 22, 23 ou 24, **caractérisé en ce que** les protubérances du troisième gaufrage sont disposées au niveau des protubérances du premier gaufrage dudit premier pli (V1) et sont formées par une compression du deuxième pli au niveau des protubérances du premier gaufrage du premier pli.

26. Produit selon une ou plusieurs des revendications 22 à 25, **caractérisé en ce que** le troisième gaufrage placé sur le deuxième pli (V2) a des protubérances continues ou discontinues présentant une hauteur moins grande par rapport aux protubérances continues ou discontinues du quatrième gaufrage placé sur ledit deuxième pli (V2).

27. Produit selon la revendication 26, **caractérisé en ce que** la hauteur des protubérances des première, deuxième, troisième et quatrième séries de protubérances produites sur le premier pli et sur le deuxième pli est dimensionnée de manière à obtenir une épaisseur apparente sensiblement uniforme du produit sur toute la largeur.

28. Produit selon au moins la revendication 20, **caractérisé en ce que** le deuxième pli (V2) a un troisième gaufrage (11) réparti uniformément sur toute la surface, de dimensions inférieures et de densité supérieure par rapport au premier gaufrage (7) dont est pourvu le premier pli (V1), au niveau des zones de bord (1).

29. Produit selon une ou plusieurs des revendications précédentes, **caractérisé en ce que** des bandes dépourvues de colle ou pourvues d'une plus petite quantité de colle sont disposées entre lesdites zones de bord longitudinal (1) et la limite extérieure (B) du produit.

30. Produit selon une ou plusieurs des revendications précédentes, **caractérisé en ce qu'**un matériau en vrac est placé entre lesdits deux plis, les zones de bord longitudinal où la quantité plus grande de colle est prévue empêchant ledit matériau en vrac de s'échapper.

31. Produit selon la revendication 30, **caractérisé en ce que** ledit matériau en vrac est un matériau en poudre et/ou un matériau en fibre et/ou un matériau en grains.

32. Produit selon la revendication 30 ou 31, **caractérisé en ce que** ledit matériau en vrac inclut un matériau superabsorbant.

33. Produit selon une ou plusieurs des revendications 30 à 32, **caractérisé en ce que** le long dudit produit un collage est fourni au moyen d'un gaufrage ou d'un microgaufrage incluant au moins une protubérance ayant la forme d'une ligne ou d'une projection sensiblement continue.
